**Europäisches Patentamt**

**European Patent Office**

**Office européen des brevets**

(19)

(11) Veröffentlichungsnummer: **0 113 825 B1**

(12) ## EUROPÄISCHE PATENTSCHRIFT

(45) Veröffentlichungstag der Patentschrift:
07.10.87

(21) Anmeldenummer: 83111207.3

(22) Anmeldetag: 10.11.83

(51) Int. Cl.⁴: **H 01 M 2/34, H 01 M 2/02, H 01 H 85/02**

(54) Batteriegehäuse oder Akkumulator mit im Stromableiter vorgesehener Überlastungssicherung.

(30) Priorität: 23.11.82 DE 8232757 U

(43) Veröffentlichungstag der Anmeldung:
25.07.84 Patentblatt 84/30

(45) Bekanntmachung des Hinweises auf die Patenterteilung:
07.10.87 Patentblatt 87/41

(84) Benannte Vertragsstaaten:
AT DE FR GB IT SE

(56) Entgegenhaltungen:
CA - A - 1 020 221
DE - A - 1 488 404
GB - A - 698 391
US - A - 2 454 487
US - A - 3 937 636

(73) Patentinhaber: **ACCUMULATORENFABRIK SONNENSCHEIN GMBH, Thiergarten Postfach 1180, D-6470 Büdingen 1 Oberhessen (DE)**

(72) Erfinder: **Holland, Gunther, Mühlstrasse 48, D-6470 Büdingen 2 (DE)**
Erfinder: **Müller, Hans, Neuer Weg 7, D-6470 Büdingen 4 (DE)**

(74) Vertreter: **Baumann, Eduard, Dipl.-Phys., Postfach 1201 Sattlerstrasse 1, D-8011 Höhenkirchen/München (DE)**

## Beschreibung

Die Erfindung bezieht sich auf ein Batteriegehäuse oder einen Akkumulator gemäss dem Oberbegriff des Anspruches 1.

Für bestimmte Zwecke, insbesondere in hochwertigen elektronischen Geräten wie Videorekordern, ist es erforderlich, in die positive Stromableitung des Batteriegehäuses oder Akkumulators eine Überlastsicherung einzubauen.

Im Unterschied zum Akkumulator sind dabei im Batteriegehäuse im allgemeinen eine Reihe von Stabbatterien angeordnet.

Der Einbau einer Überlastsicherung wird in der Regel dadurch bewerkstelligt, dass man beim Anschlusskabel den positiven Stromableiter unterbricht, ein spezielles Sicherungsgehäuse in das Anschlusskabel einbaut, und die Sicherung selbst durch einen Schraubdeckel oder dergleichen verschliesst.

Der Einbau der Sicherung in das Kabel hat zum einen den Nachteil, dass der Bereich zwischen Batterie und Sicherungskasten ungesichert bleibt. Zum anderen birgt das bewegliche und unter Umständen auch einem Zug ausgesetzte Kabel Kontaktprobleme und die Gefahr einer Beschädigung und dadurch entstehende Gefahren in sich. Davon abgesehen ist die Herstellung umständlich und aufwendig. Auch das Auswechseln einer defekten Sicherung ist umständlich; im allgemeinen muss mühsam ein Deckel abgeschraubt, die Sicherung entnommen und der Deckel wieder aufgeschraubt werden.

Der Erfindung liegt die Aufgabe zugrunde, unter Vermeidung der angeführten Nachteile des Standes der Technik und ein Batteriegehäuse gemäss dem Oberbegriff des Anspruches 1 so auszubilden, dass der Einbau der Überlastsicherung in das Anschlusskabel vermieden wird, die Betriebssicherheit verbessert, und Herstellung und Sicherungswechsel vereinfacht werden.

Die Aufgabe wird erfindungsgemäss durch die Merkmale des Kennzeichens des Anspruches 1 gelöst. Weitere Ausbildungen der Erfindung sind in den Unteransprüchen dargestellt.

Die Grundidee der Erfindung besteht darin, an einer Aussenseite des Batteriegehäuses ein Kontaktfedernpaar vorzusehen und die Überlastsicherung, die an einer Halterung befestigt ist, in diese Kontakte einrasten zu lassen.

Im bevorzugten Ausführungsbeispiel der Erfindung werden diese Kontakte durch ein spezielles Sicherungsgehäuse fixiert. Weiterhin kann die Halterung für die Überlastsicherung am Batteriegehäuse oder vorzugsweise am Sicherungsgehäuse angelenkt werden, wobei die Halterung im eingerasteten Zustand in eine entsprechende Aussparung des Sicherungsgehäuses einrasten kann. Im aufgeklappten Zustand des Deckels liegt die Sicherung, die lediglich im Mittelteil durch zwei federnde Halteklammern gehalten wird, vollständig frei und kann mit Leichtigkeit ausgewechselt werden. Anschliessend drückt man lediglich den Deckel nach unten, wobei er beziehungsweise die beiden Sicherungskontakte ein

rasten, so dass eine stabile Fixierung der Sicherung vorgenommen ist, ohne dass dazu ein Werkzeug nötig wäre.

Ein Ausführungsbeispiel der Erfindung ist in der Zeichnung dargestellt.

Es zeigt:

Figur 1 eine perspektivische schematische Darstellung eines Akkumulators mit Sicherungsgehäuse.

Figur 2 die Draufsicht auf den Deckel des in Figur 1 gezeigten Akkumulators mit Sicherungsgehäuse,

Figur 3 einen Querschnitt durch das Sicherungsgehäuse längs der Linie III-III von Figur 21 bei senkrecht geöffneter Halterung für die Überlastsicherung,

Figur 4 einen Längsschnitt durch das Sicherungsgehäuse mit schräg aufgeklappter Halterung, entlang der Linie IV-IV von Figur 2.

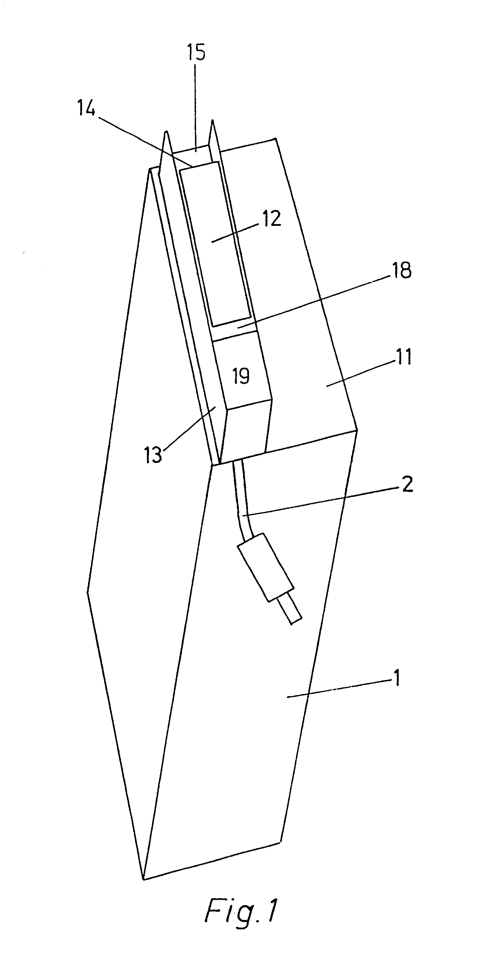

In Figur 1 ist das Einsetzgehäuse in Form des Akkumulators mit 1 bezeichnet, der Deckel des Akkumulators mit 11. Mit dem Deckel 11 ist ein Sicherungsgehäuse 13 verschweisst. An der Stirnseite dieses Sicherungsgehäuses ist ein Anschlusskabel 2 mit (nicht bezeichnetem) Anschlussstecker dargestellt. Ein Ende der Aussenseite des Sicherungsgehäuses 13 ist mit 19 bezeichnet. An einer Aussparung 18 des Sicherungsgehäuses 13 ist eine Halterung 12 in Form eines Deckels dargestellt, der an der dem Ende 19 gegenüberliegenden Seite des Sicherungsgehäuses 13 über einen Streifen 15 und eine Schwächungslinie 14 gelenkig mit diesem Ende des Sicherungskastens 13 verbunden ist.

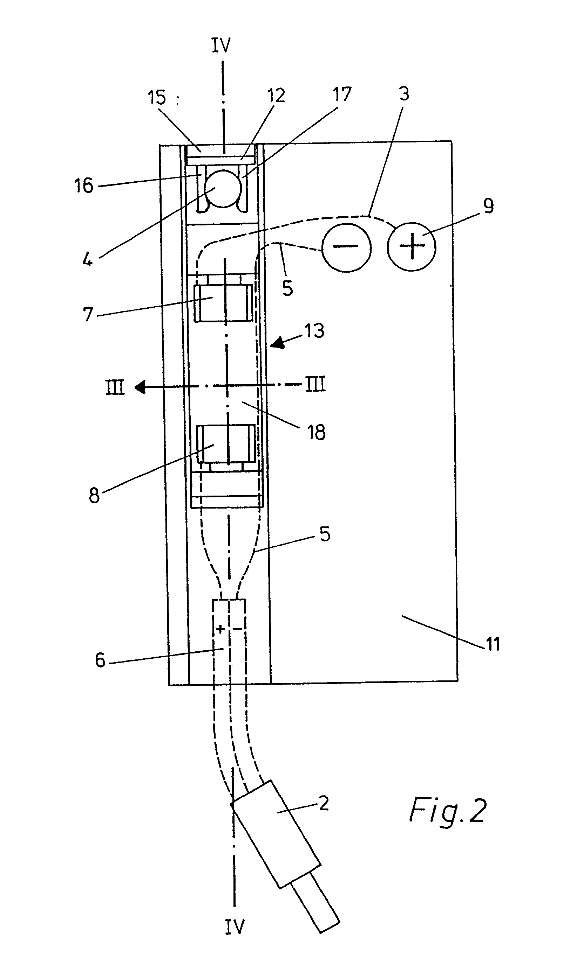

Die in Figur 2 gezeigte Draufsicht auf den Dekkel 11 des Akkumulators sowie insbesondere das Sicherungsgehäuse 13 lässt nähere Einzelheiten erkennen. So liegt die Aussparung 18 des Sicherungsgehäuses 13 frei. Den Hauptraum der Aussparung 18 nehmen 2 gegenüberliegende Kontaktfedern 7 beziehungsweise 8 ein. Am oberen Ende des Sicherungsgehäuses 13 ist der Deckel 12 in senkrechter Öffnungsstellung vorgesehen, der über zwei nach vorne stehende gegenüberliegende federnde Halteklammern 16, 17, die vorzugsweise einstückig mit dem Deckel 12 ausgebildet sind, die Sicherung 4 haltert. Der Deckel 12 ist über den Anschlussstreifen 15 mit einem entsprechenden Sockel des Sicherungsgehäuses 13 verschweisst. Weiterhin ist in Figur 2 die Verbindung des positiven Poles 9 über den positiven Stromableiter 3 mit der ersten Kontaktfeder 7, sowie die Verbindung der zweiten Kontaktfeder 8 mit dem positiven Anschluss 6 des Anschlusskabels 2 dargestellt. Dagegen ist der negative Stromableiter 5 des negativen (nicht bezeichneten) Anschlusspoles unmittelbar, also ohne Absicherung, mit dem Anschlusskabel 2 verbunden. Selbstverständlich wäre es auch möglich , beide Stromableiter über zwei parallel angeordnete Sicherungsanordnungen abzusichern.

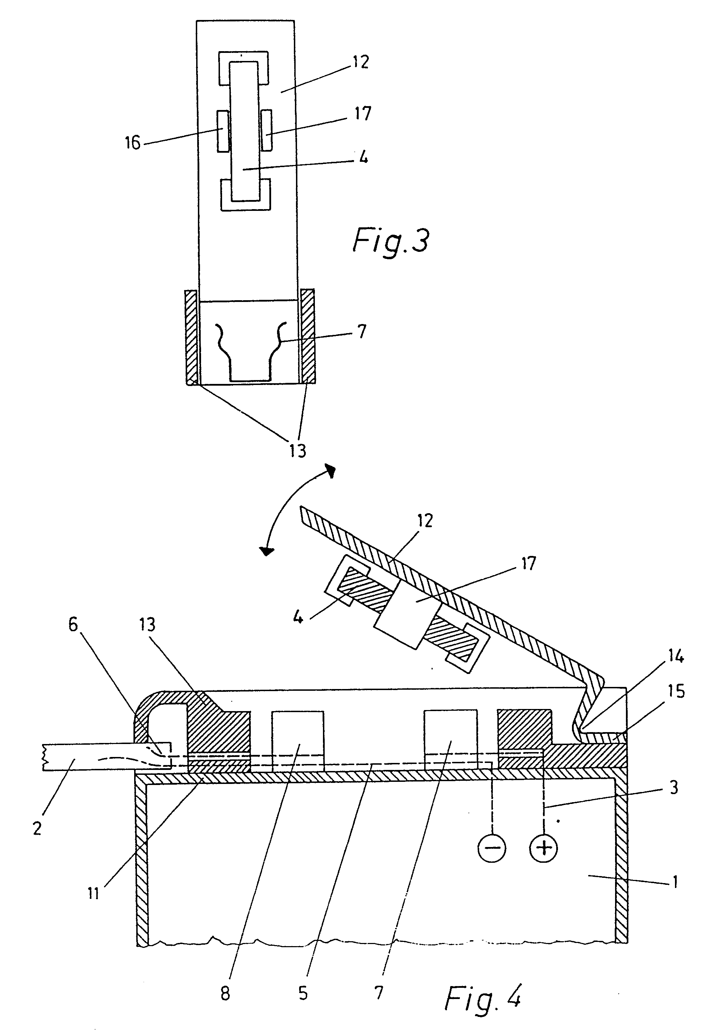

Figur 3 zeigt einen Querschnitt längs der Linie III-III von Figur 2, wobei wie in Figur 2 der Deckel 12 senkrecht nach oben geöffnet ist. Hier sind die Aussenseiten des Sicherungsgehäuses 13 im Schnitt dargestellt. Ausserdem ist der genauere Aufbau der ersten Kontaktfeder 7, der Sicherung 4 sowie der gegenüberliegenden Halteklammern 16, 17 für die Sicherung 4 dargestellt.

Figur 4 zeigt einen Längsschnitt der Darstellung von Figur 2 entlang der Linie IV-IV. Das Sicherungsgehäuse 13 ist danach im wesentlichen ein Hohlkörper und nur an einigen Stellen mit dem darunter angeordneten Deckel 11 des Batteriegehäuses 1 verschweisst. Dabei ist der Deckel 12 mit der Halteklammer 17 und Sicherung 4 in halb geöffneter Stellung dargestellt. Deutlich erkennbar sind der mit einem darunter liegenden Sockel des Sicherungsgehäuses 13 verschweisste Streifen 15 sowie die, das Gelenk bildende Schwächungslinie 14. Weiterhin ist der unmittelbar mit dem negativen Anschlusspol des Akkumulators verbundene negative Stromableiter 5 zu erkennen, der unmittelbar zum Anschlusskabel 2 führt, sowie der positive, vom positiven Batteriepol ausgehende Stromableiter 3, der zu ersten Kontaktfeder 7 führt. Ausserdem ist die positive Stromableitung 6 von der zweiten Kontaktfeder 8 zum Anschlusskabel 2 zu erkennen.

**Patentansprüche**

1. Zum Einschub in ein Batteriefach eines Elektrogerätes bestimmtes Batteriegehäuse oder Akkumulator (1) mit Anschlusskabel (2) für das Gerät, wobei wenigstens im positiven Stromableiter (3) eine Überlastsicherung (4) vorgesehen ist und der mit dem negativen Batterieanschluss verbundene negative Stromableiter (5) unmittelbar mit dem Anschlusskabel (2) verbunden ist, gekennzeichnet durch

a) ein an einer Aussenseite (11), vorzugsweise dem Deckel des Batteriegehäuses (1) befestigtes Kontaktfedernpaar, dessen erste Kontaktfeder (7) mit dem mit dem positiven Batteriepol (9) verbundenen positiven Stromableiter (3), und dessen zweite Kontaktfeder (8) mit dem positiven Kabelanschluss (6) des Anschlusskabels (2) verbunden ist,

b) eine Abdeck-Halterung (12) aus elektrisch isolierendem Material für die Überlastsicherung (4), derart, dass die beiden Kontakte der Überlastsicherung (4) in die Kontaktfedern (7, 8) einrastbar sind.

2. Batteriegehäuse nach Anspruch 1, gekennzeichnet durch ein mit der Aussenseite (11) verbundenes Sicherungsgehäuse (13), das die beiden Kontaktfedern (7, 8) an der Aussenseite (11) fixiert.

3. Batteriegehäuse nach Anspruch 2, dadurch gekennzeichnet, dass die Halterung (12) für die Überlastsicherung (4) am Batteriegehäuse (1) oder am Sicherungsgehäuse (13) angelenkt ist.

4. Batteriegehäuse nach Anspruch 3, dadurch gekennzeichnet, dass die Halterung (12) im wesentlichen ein Deckel mit zwei gegenüberliegenden, sich zum Sicherungsgehäuse (13) erstrekkenden, federnden Halteklammern (16, 17) für den Eingriff mit dem isolierenden Mittelteil der Sicherung (4) ist, wobei der Deckel (12) im eingerasteten Zustand in eine entsprechende Aussparung (18) des Sicherungsgehäuses (13) passt und seine Oberfläche mit der Oberfläche (19) des Sicherungsgehäuses (13) eine Ebene bildet.

5. Batteriegehäuse nach Ansprüchen 3 und 4 dadurch gekennzeichnet, dass die Halterung (12) über eine Schwächungslinie (14) eines mit der Halterung (12) verbundenen, vorzugsweise abgewinkelten Streifens (15) dessen Ende mit dem Batteriegehäuse (1) beziehungsweise Sicherungsgehäuse (13) verbunden, vorzugsweise verschweisst ist, angelenkt ist.

**Claims**

1. A battery housing or storage battery (1) for insertion into a battery compartment of an electric appliance, comprising a power lead (2) for the appliance, wherein an overload protection (4) is provided at least in the positive current collector (3) while the negative current collector (5), which is connected to the negative battery terminal, is directly connected to the power lead (2), characterised by

a) a pair of contact springs secured to an outer surface (11), preferably the cover, of the battery housing, the first contact spring (7) of said pair being connected to the positive current collector (3) which is connected to the positive battery terminal (9), and the second contact spring (8) of said pair being connected to the positive terminal (6) of the power lead (2),

b) a covering mount (12) of electrically insulating material for the overload (4) such that both contacts of the overload protection (4) can be latched into the contact springs (7, 8).

2. A battery housing as claimed in claim 1, characterised by a fuse box (13) connected to the outer surface (11), said fuse box fixing the two contact springs (7, 8) to the outer surface (11).

3. A battery housing as claimed in claim 2, characterised in that the mount (12) for the overload protection (4) is hinged either to the battery housing (1) or to the fuse box (13).

4. A battery housing as claimed in claim 3, characterised in that the mount (12) substantially comprises a lid having two oppositely disposed resilient retaining clips (16, 17) extending towards the fuse box (13) for engagement with the insulating middle portion of the overload protection (4), the lid (12) in the latched position fitting into a corresponding recess (18) of the fuse box (13) and the top surface of said lid being coplanar with the top surface (19) of the fuse box (13).

5. A battery housing as claimed in claims 3 and 4, characterised in that the mount (12) is hinged by means of an weakening line (14) of a strip (15), which is joined to the mount (12) and is preferably bent and the end of which is connected, preferably by welding, to the battery housing (1) or the fuse box (13), respectively.

## Revendications

1. Boîtier de batterie ou accumulateur (1) destiné à être inséré dans le casier-batterie d'un appareil électrique, avec câble de raccordement (2) pour l'appareil, dans lequel au moins un coupe-circuit de surcharge (4) est prévu pour la dérivation positive (3) de la batterie, et la dérivation négative (5) reliée au pôle négatif de la batterie est immédiatement raccordée au câble de raccordement. Caractérisé par

a) une paire de pinces de contact fixée sur la face extérieure (11), de préférence sur le couvercle du boîtier de la batterie (1), dont la première pince (7) est raccordée à la dérivation positive (3) reliée au pôle positif de la batterie, et dont la deuxième pince de contact (8) est raccordée à la ligne positive (6) du câble de raccordement de la batterie.

b) un couvercle de maintien (12) du coupe-circuit de surcharge (4) en matériau électriquement isolant, agencé de telle sorte que les deux contacts du coupe-circuit de surcharge (4) peuvent s'encliqueter dans les pinces de contact (7, 8).

2. Boîtier de batterie selon la revendication 1, caractérisé par un boîtier (13) de coupe-circuit solidaire de la face extérieure (11) fixant les deux pinces de contact (7, 8) sur cette face extérieure (11) de la batterie.

3. Boîtier de batterie selon la revendication 2, caractérisé en ce que la fixation (12) du coupe-circuit de surcharge (4) est articulée sur le boîtier de la batterie (1) ou sur le boîtier du coupe-circuit (13).

4. Boîtier de batterie selon la revendication 3, caractérisé en ce que la fixation (12) se compose essentiellement d'un couvercle muni de deux joues élastiques (16, 17) disposées l'une en face de l'autre vers le boîtier du coupe-circuit (13) et destinées à maintenir la partie médiane isolante du coupe-circuit (4), le couvercle (12) pouvant s'insérer en position fermée dans un évidement correspondant (18) du boîtier du coupe-circuit (13), sa surface formant alors un seul plan avec la surface (19) du boîtier du coupe-circuit (13).

5. Boîtier de batterie selon la revendication 3 et 4, caractérisé en ce que la fixation (12) est articulée par l'intermédiaire de la ligne d'affaiblissement (14) d'une bande (15) rattachée à la fixation et de préférence pliée en équerre, dont l'extrémité est liée ou de préférence soudée sur le boîtier de la batterie (1) ou le boîtier du coupe-circuit (13).

Fig.1

Fig.2

0 113 825

Fig.3

Fig. 4

9